# EUROPEAN PATENT APPLICATION

(11) **EP 3 147 113 A1**
(43) Date of publication of application: **29.03.2017**
(21) Application number: 15796291.1
(22) Date of filing: 21.05.2015
(51) Int. Cl.: B29D 30/54, B29C 35/18, B29C 73/00

(54) **CONFIGURATION FOR AN ENVELOPE FOR TYRE RETREADING**

(30) Priority: 21.05.2014 BR 202014012293 U
(71) Applicant: Borrachas Vipal S.A., 95320-000 Nova Prata, RS (BR)
(72) Inventor: ROQUE FERRETO, Mauri, 95320-000 Nova Prata - RS (BR); RODRIGUES VfEIRA, Eleno, 95320-000 Nova Prata - RS (BR); BORGES VIEIRA, Ismael, 95320-000 Nova Prata - RS (BR); GUEDES, Leandro Gustavo, 95320-000 Nova Prata - RS (BR); RAMPON, Paulo, 95320-000 Nova Prata - RS (BR)
(74) Representative: Nuss, Laurent
(86) International application number: PCT/BR2015/000080
(87) International publication number: WO 2015/176148

(57) **Abstract**

The present utility model proposes a configuration applied to envelope for tire retreading in a cold retreading process. Two part envelopes are known in the prior art. However, known forms of sealing between the pieces are unsatisfactory, either because problems arise in connection with the seal or because they reduce the service life of the envelope. With the intention of overcoming these limitations, the present utility model proposes an envelope (20) comprising three parts (22, 24, 26), wherein one flap (224) of the first part (22) has a free end with a different cross section (224b), wherein a flap (244) of the second part (24) has a free end with a different cross section (244b), and wherein the third part (26) has an elastic ring form of sufficient width to cover the different cross section (224b) of the flap (224) of the first part (22) and the different cross section (244b) of the flap (244) of the second part (24).

## Description

The present utility model is related to the technical field of tire retreading for the cold retreading process and, more particularly, to a configuration applied to envelope for tire retreading for the cold retreading process.

The tire retreading consists of the process of integrating a new tread pattern on a tire carcass which had its original tread worn or damaged, thus re-establishing the conditions of use of the tire.

In the cold retreading process, a new pre-shaped tread with a particular pattern of grooves is positioned on a tire carcass ready to be retreaded. The set is taken to a pressurized and heated environment, such as an autoclave, for a given time. At the end of the process of cold retreading, the tread is integrated to the tire carcass. The process of cold retreading is often used in the retreading of tires for heavy vehicles, especially trucks and buses.

In the cold retreading process, before taking the set formed by the carcass and tread to the pressurized and heated environment, it is necessary to cover said set with an envelope and carry out the vacuum forming internally in the envelope, obtaining a tight environment.

A conventional envelope consists of a membrane in a single body, made of flexible material, and having a shape suitable to externally cover the flanks of the carcass and the outer surface of the tread. Still, the envelope is provided with an air valve. The coating process of the set of carcass and tread by the envelope, also known as enveloping, is extremely difficult, since the conventional envelope must be drawn from its central hole until the set of carcass and tread can be introduced inside the envelope. Normally, this enveloping process is accomplished with the aid of equipment called an enveloper, which comprises a set of arms employed to stretch the conventional envelope.

Once applied to the conventional envelope, the same must be closed at the tire carcass to obtain a sealed environment at the inner region in the envelope. For this purpose, an inner envelope installed inside the carcass can be used, so that the said inner envelope covers all internal surfaces of the carcass, outlining the carcass bead regions and advancing over part of the external surface of each flank of the carcass, where a sealing with each end of the conventional envelope is provided. Alternatively to using the inner envelope, a rim to close the conventional envelope with the carcass can be used. In this case, the ends of the envelope, in the vicinity of the carcass bead, are pressed against the outer surface of the rim, forming sealed joints. Once the conventional envelope has been closed, either with the aid of the inner envelope or rim, an air pump connected to the air valve of the conventional envelope is used, to form a vacuum in the internal environment of the same. From this moment, the set is ready to be taken to the pressurized and heated environment, such as an autoclave.

As described earlier, for the enveloping of the set of carcass and tread by the conventional envelope a big stretch of the envelope is required, regardless of later closing with inner envelope or with rim. To enable this stretch, the thickness of the conventional envelope tends to be thin. This factor, added to the fatigue caused by repeated cycles of enveloping, often causes a tear in the conventional envelope, limiting its useful life.

In order to increase the useful life of an envelope, the Patent BRPI8406324-6 proposes an envelope consisting of two parts, the first part with a shape capable of externally covering a first flank of the carcass and half of the tread, and the second part with a shape able to externally cover the second flank of the carcass and the other half of the tread and being that in the central region of the top of the tread a region from the end of the first part is facing out and a region from the end of the second part is folded out, the said end regions being placed face to face and retained by tightening a pair of retaining rings, in order to form a seal joint between the parts which aid the vacuum forming internally to the envelope.

With the use of the envelope in two parts proposed in the Patent BRPI8406324-6 the need of large stretches of the envelope is eliminated to provide the enveloping of the carcass and tread set, so that it was hoped that the proposed envelope would tend to have a longer useful life. In addition, with this envelope configuration the use of enveloping equipment is eliminated. However, the seal configuration between the parts of the envelope proposed in Patent BRPI8406324-6 is not satisfactory, since the fastening held by the pair of retaining rings against the end regions of the parts positioned face to face, in a sufficient intensity for a proper seal, damages the said end regions, causing the disruption of the same after a few cycles of enveloping. In addition, due to the complexity of the proposed pair of retaining rings in Patent BRPI8406324-6, its use represents an additional cost to the retreading process.

Alternatively, Patent BRMU7901957-9 proposes another envelope configuration consisting of two parts, given that for the sealing between the parts in the center of the top of the tread, the first part has an end region covered by a region of the end of the second part, forming a gasket by overlap. Although this configuration eliminates the use of a pair of retaining rings, the seal configuration between the parts of the envelope is not satisfactory, since air leaks occur into the envelope.

Note that, as previously described, after enveloping and vacuum forming, the carcass and tread set is taken to a pressurized and heated environment, such as an autoclave, for a given time. In this environment, the envelope is pressed against the tread due to the pressure existing outside the envelope so that the tread and carcass are forced against each other. At the same time, heat is applied in order to vulcanize the tread on the carcass.

It is important that the envelope remains well sealed for the set of carcass and tread, in order to prevent air from entering internally in the envelope. The presence of air internally to the envelope during the curing process may affect the quality of integration between the carcass and the tread or may result in deformation and/or inadequate settlement of the tread, compromising the later use of the retreaded tire. Thus, due to the deficiency in the seal between the parts of the proposed envelope in Patent BRMU7901957-9, the abovementioned problems are present in the retreading performed with the aid of this configuration of envelope.

In face of the foregoing, the present utility model aims to propose a configuration applied to an envelope for retreading tires that would suppress or mitigate the limitations presented in the state of the art. More particularly, the present utility model aims to propose a configuration applied to envelope which enables the enveloping of the carcass and tread set to be accomplished without the need for large stretches of the envelope and without the need to use enveloping equipment.

The present utility model further aims to propose an envelope with improved useful life, with low complexity and low-cost for manufacturing.

And, above all, the present utility model aims to propose an envelope that provides an excellent seal for the set of carcass and tread, to prevent any air from entering internally to the envelope after enveloping and vacuum forming.

To accomplish these goals, the present envelope for tire retreading comprises three parts; wherein the first part comprises a side wall, from which extends a flap, the said sidewall containing a shape able to cover at least a part of the outer portion of a first flank of the carcass and a first shoulder of the tread, and the said flap having a shape capable of covering a first portion of the top of the tread, wherein the free end of the said flap has at least a differentiated cross-section with a thickness greater than the thickness of the said flap; wherein the second part comprises a side wall, from which extends a flap, the said side wall having a shape able to cover at least part of the outer portion of a second flank of the carcass and a second shoulder of the tread, and the said flap having a shape able to cover a second portion of top of the tread, other than the first portion covered by the flap of the first part, and the free end of the flap of the second part has at least a differentiated cross-section with a thickness greater than the thickness of the flap; wherein the third part comprises an elastic ring shape wide enough to cover the differentiated cross-section of the flap of the first part and the differentiated cross-section of the flap of the second part; and wherein at least the first part or the second part is equipped with an air valve.

According to the proposed solution, the third part with the shape of an elastic ring remains pressed against the flap of the first part and against the flap of the second part, creating a seal between the parts.

At the same time, the presence of the differentiated cross section on the free end of the flap of the first part increases the sealing effect between the said first part and the third part, and the presence of the differentiated cross section on the free end of the flap of the second part increases the sealing effect between the said second part and the third part, caused by the suction of air through the air valve.

Thus, advantageously, an envelope which provides an excellent seal for the carcass and tread set is obtained, to prevent any air from entering internally to the envelope after enveloping and vacuum forming.

The utility model will be better understood with the detailed description below, which is best interpreted with the aid of figures, namely:
Figure 1 depicts a cross section perspective view, of a set of tire casing (12) and tread (14) covered by an envelope (20), according to the present utility model, closed with the aid of an inner envelope (30).
Figure 2 depicts a plan view of a cross section of a set of tire casing (12) and tread (14) covered by an envelope (20) with uniform thickness, the said envelope (20) being closed with the aid of an inner envelope (30).
Figure 3 depicts a plan view of a cross section of a set of tire casing (12) and tread (14) covered by an envelope (20) with variable thickness, the said envelope (20) being closed with the aid of an inner envelope (30).
Figure 4 depicts a cross section perspective view, of a set of tire casing (12) and tread (14) covered by an envelope (20), in accordance with the present utility model, closed with the aid of a ring (40).
Figure 5 depicts a plan view of a cross section of a set of tire casing (12) and tread (14) covered by an envelope (20) with uniform thickness, the said envelope (20) being closed with the aid of a ring (40).
Figure 6 depicts a plan view of a cross section of a set of tire casing (12) and tread (14) covered by an envelope (20) with variable thickness, the said envelope (20) being closed with the aid of a ring (40).
Figure 7 depicts a plan view of a cross section of a set of tire casing (12) and tread (14) covered by an envelope (20) with uniform thickness, the said envelope (20) being closed by a continuity of the side wall (222) of the first part (22).

In the cold retreading process of a tire, a tire casing (12) ready to be retreaded is covered by a new pre-shaped tread (14) having a top (145) with a particular pattern of grooves (141). The casing (12) consists of a pair of flanks (121, 122), each flank (121, 122) from a region called bead (124) until they are joined together by a central portion (123). The tread (14) is delimited by a pair of shoulders (142, 144) and is positioned on the outer surface of the central portion (123) of the casing (12), where the shoulders (142, 144) define the lateral ends of the tread (14) positioned according to its related flank (121, 122) of the casing (12). For the primary connection of the tread (14) on the casing (12) a suitable means is used, such as a connection rubber or a *orbicushion* rubber, both known to be state of the art.

The set of casing (12) and tread (14) should be taken to a pressurized and heated environment, such as an autoclave, for a given time. At the end of the process of cold retreading, the new tread (14) is integrated in the tire casing (12), re-establishing the conditions of use for the tire.

However, before taking the formed set of the casing (12) and tread (14) to the pressurized and heated environment, it is necessary to cover the said set with an envelope and perform the vacuum forming internally to the envelope, to obtain a tight environment.

The present utility model proposes a configuration of an envelope (20) for tire retreading, the said envelope (20) being comprised of three parts (22, 24, 26); wherein the first part (22) comprises a side wall (222), from which extends a flap (224), the said sidewall (222) containing a shape able to cover at least a part of the outer portion of a first flank (121) of the casing (12) and a first shoulder (142) of the tread (14), and the said flap (224) having a shape capable of covering a first portion of the top (145) of the tread (14), wherein the free end of the said flap (224) has at least a differentiated cross-section (224b) with a thickness greater than the thickness of the said flap (224); wherein the second part (24) comprises a side wall (242), from which extends a flap (244), the said side wall (242) having a shape able to cover at least part of the outer portion of a second flank (122) of the casing (12) and a second shoulder (144) of the tread (14), and the said flap (244) having a shape able to cover a second portion of the top (145) of the tread (14), other than the first portion covered by the flap (224) of the first part (22), and the free end of the flap (244) of the second part (24) has at least a differentiated cross-section (244b) with a thickness greater than the thickness of the flap (244); wherein the third part (26) comprises an elastic ring shape wide enough to cover the differentiated cross-section (224b) of the flap (224) of the first part (22) and the differentiated cross-section (244b) of the flap (244) of the second part (24); and wherein at least the first part (22) or the second part (24) is equipped with an air valve (28). The first part (22) and the second part (24), as well as the third part (26) in the shape of an elastic ring, are produced in flexible waterproof material, such as rubber.

According to the proposed solution, the third part (26) in the shape of an elastic ring remains pressed against the flap (224) of the first part (22) and against the flap (244) of the second part (24), creating a seal between the parts (22, 24, 26).

At the same time, the presence of the differentiated cross-section (224b) on the free end of the flap (224) of the first part (22) increases the sealing effect between said first part (22) and the third part (26), and the presence of the differentiated cross-section (244b) on the free end of the flap (244) of the second part (24) increases the sealing effect between said second part (24) and the third part (26), created by the suction of air through the air valve (28).

Thus, advantageously, an envelope (20) which provides an excellent seal in relation to the set of casing (12) and tread (14) is obtained, in order to prevent any air from entering internally to the envelope (20) after enveloping and vacuum forming.

Preferably, the flap (224) of the first part (22) extends until a previous position to the median plane (M) of the tread (14) and, preferably, the flap (244) of the second part (24) extends until a previous position to the median plan (M) of the tread (14). It can be noted that, preferably, the first part (22) and the second part (24) are manufactured in a single die, so they are identical to each other. Thus, advantageously, in case of damage in one of those parts (22, 24), only the damaged part is replaced.

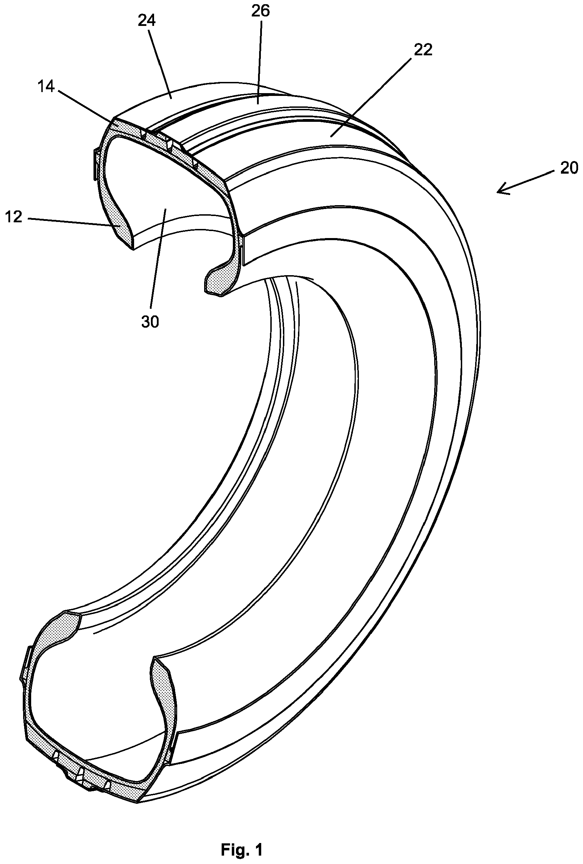

The envelope (20) must also be closed next to the casing (12) for the formation of the vacuum internally to the envelope (20). For this purpose, for example, as can be seen in Figures 1 to 3, an inner envelope (30) installed inside the casing (12) can be used, so that the inner envelope (30) covers all internal surfaces of the casing (12), outlining the regions of the bead (124) of the casing (12) and advancing over part of the external surface of each flank (121, 122) of the casing (12). In this outside region of each flank (121, 122), a region of the end of the sidewall (222, 242) of the respective part (22, 24) is positioned over a respective region of the end of the inner envelope (30), in order to form a seal joint when forming the vacuum.

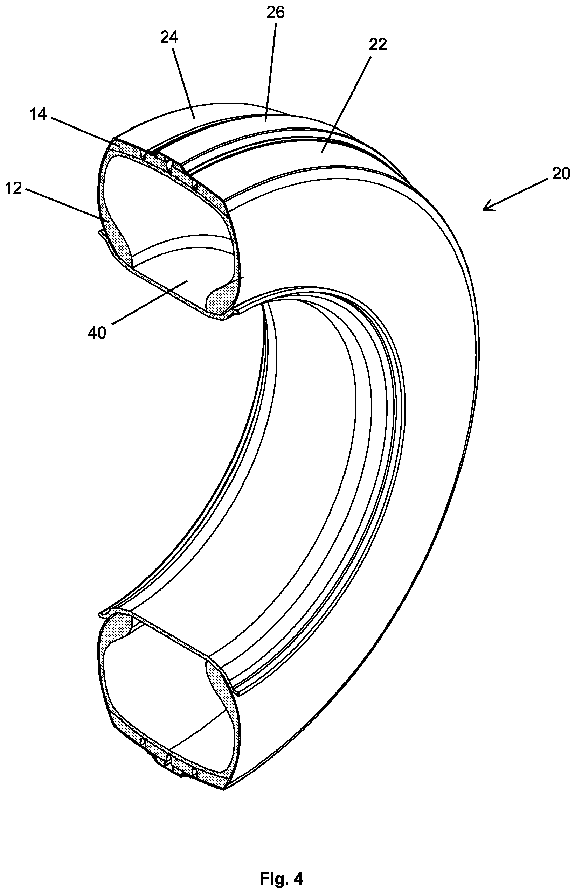

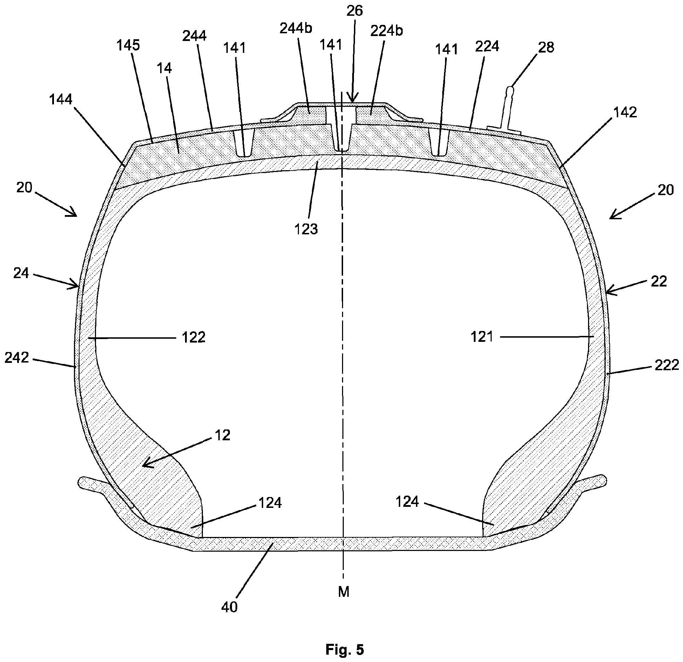

Alternatively to using the inner envelope (30), a ring (40) for closing the envelope (20) next to the casing (12) can be used, as it can be seen in Figures 4 to 6. In this case, both the side wall (222) of the first part (22) and the side wall (242) of the second part (24) move close to the bead (124) from their flank (121, 122) of the casing (12) and remain pressed against the outer surface of the rim (40), forming sealed joints.

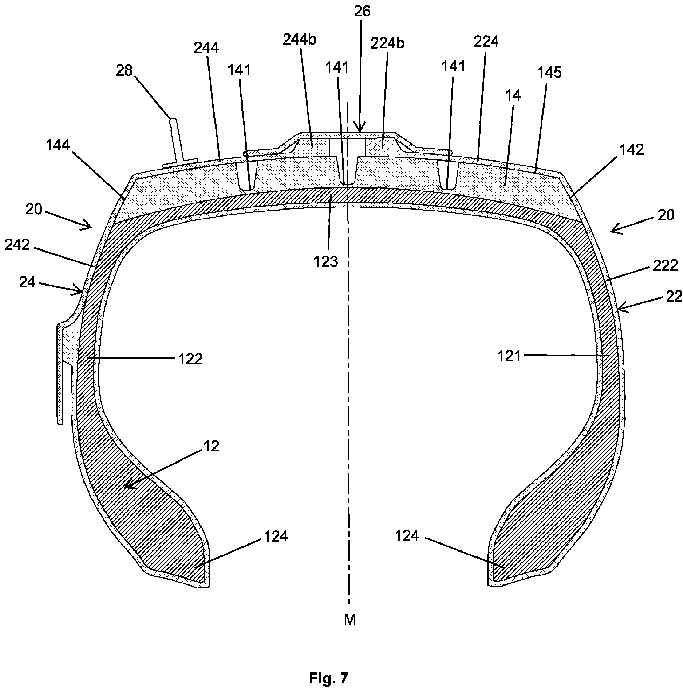

Alternatively to the use of an inner envelope (30) or ring (40), for closing the envelope (20) next to the casing (12), as can be seen in Figure 7, the side wall (222) of the first part (22) advances and gets around the bead region (124) of the first flank (121) of the casing (12), covers the entire inner surface of the casing (12), gets around the bead region (124) of the second flank (122) and advances over part of the outer surface of the second flank (122) of the casing (12). In this outside area of the second flank (122), a region of the end of the sidewall (242) of the second part (24) is positioned over a region of the end of the first part (22), in order to form a sealing joint when the vacuum is formed.

Once the envelope (20) is closed and the vacuum is formed internally to the envelope (20), by suction of air through the air valve (28), the set of casing (12) and tread (14) is ready to be taken to the pressurized and heated environment, such as an autoclave.

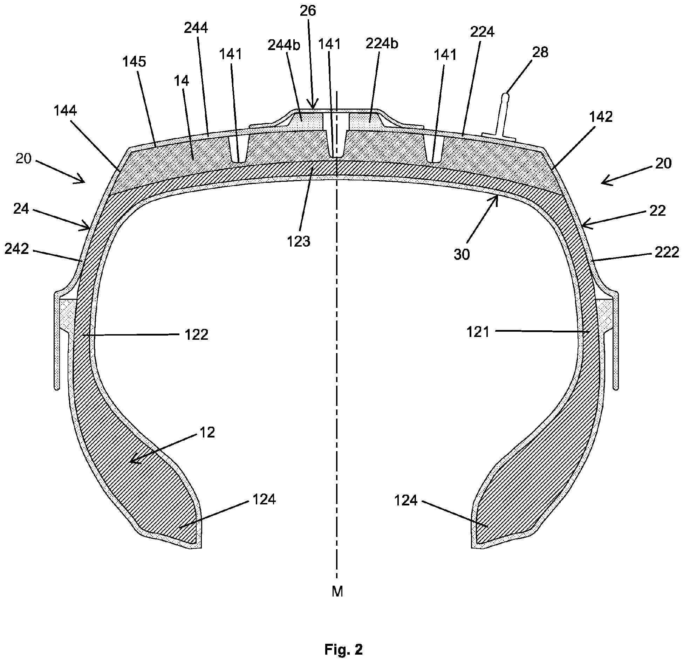

Moreover, as can be seen in Figures 2, 5 and 7, the first part (22) has a uniform thickness, with the exception of its differentiated cross-section (224b), and the second part (24) having a uniform thickness, with the exception of its differentiated cross-section (244b), and the thickness of the first part (22) identical to the thickness of the second part (24). Preferably, the thickness of the first part (22) and of the second part (24) assumes a value of 2 to 3.5 mm.

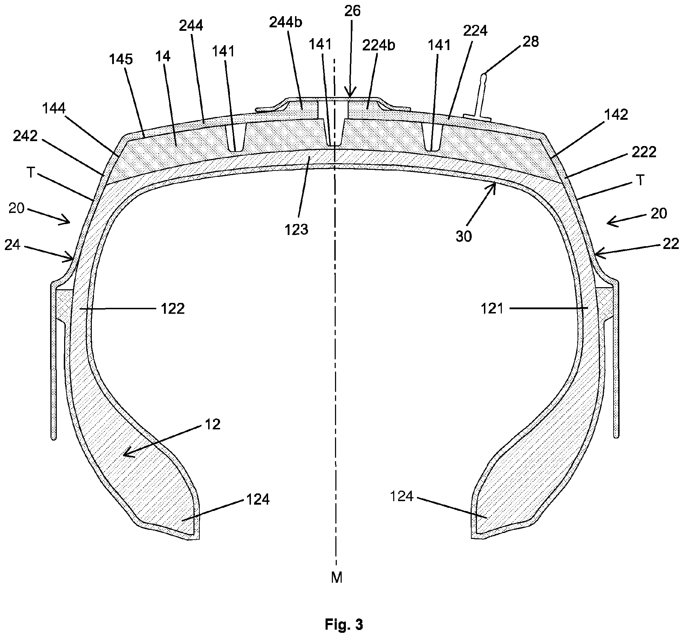

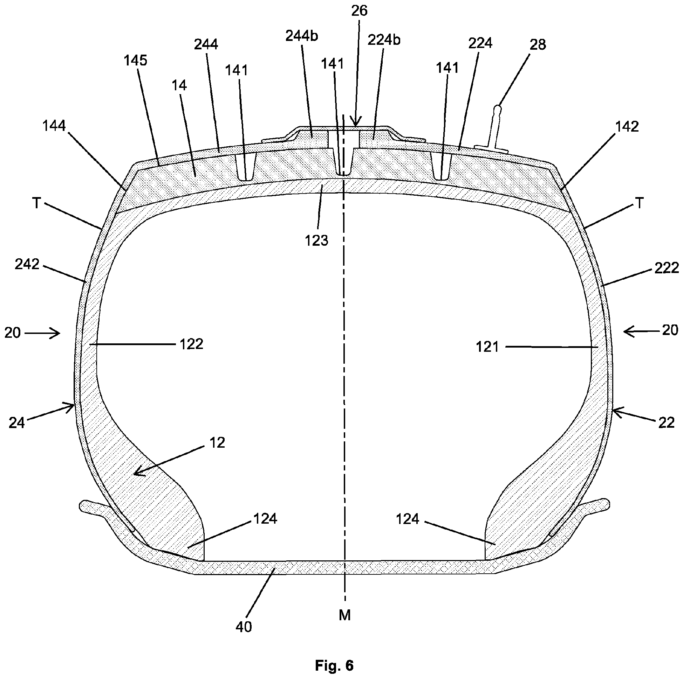

Alternatively, as you can see in Figures 3 and 6, the thickness of the first part (22) and the second part (24) is greater from a transition point (T) until a point immediately preceding the differentiated cross-section (224b, 244b) present in the flap (224, 244), where each transition point (T) is located on the sidewall (222, 242) of the respective part (22, 24) in a position next to the respective shoulder (142, 144) of the tread (14). Preferably, each transition point (T) is located in a position above half of the height of its flank (121, 122) of the casing (12) and prior to the top (145) of the tread (14).

The configuration in which the first part (22) and the second part (24) of the envelope (20) present variable thickness is preferred in relation to the configuration where the first part (22) and the second part (24) of the envelope (20) have uniform thickness, since the fact that a portion of the respective sidewall (222, 242) after the transition point (T) and the corresponding flap (224, 244) of the first part (22) and of the second part (24) have a greater thickness allows the said parts (22, 24) of the envelope (20) to assume a more structured shape and closest to the shape of the set of casing (12) and (14) tread. Thus, advantageously, the handling and installation of the first part (22) and of the second part (24) on the set of casing (12) and tread (14) become easier.

In addition, the fact that the respective flap (224, 244) of the first part (22) and of the second part (24) have a greater thickness prevents the said flap (224, 244) from being stretched into the grooves (141) of the tread (14), whether due to vacuum formed internally to the envelope (20), or due to external pressure applied to the envelope (20) during the autoclave process. Thus, advantageously, deformations in the flaps (224, 244) of the said parts (22, 24) of the envelope (20) are avoided, and, consequently, fatigue stresses that would be caused by this repeated deformation over several cycles of using the same envelope (20) are avoided, contributing to an increase of its useful life.

On the other hand, the fact that a portion of the sidewall (222, 242) prior to the transition point (T) is of a lesser thickness, advantageously, represents a savings of material in the production of the first part (22) and of the second part (24) of the envelope (20).

Preferably, the thickness of the portion of the side wall (222, 242) prior to the transition point (T) assumes a value of 2 to 3.5 mm. Preferably, the thickness of the side wall portion (222, 242) after the transition point (T) and the thickness of the flap (224, 244) until a point immediately preceding the differentiated cross-section (224b, 244b), assume a value greater than the value of the thickness of the side wall portion (224, 244) prior to the transition point (T). Preferably, this higher value is no more than 6 mm.

For example, if the first part (22) and the second part (24) of the envelope (20) were made having a side wall portion (224, 244) prior to the transition point (T) with a 3 mm thickness, the thickness of the sidewall (224, 244), from the transition point (T), and the thickness of the flap (224, 244) will have a value greater than 3 mm. This increase in thickness can be achieved gradually, as depicted in Figures 3 and 6, for example, starting with 3.1 mm at a point immediately after the transition point (T) and ending with 5 mm at one point immediately preceding the differentiated cross-section (224b, 244b). Or this increase in thickness can be achieved abruptly, according to a non-represented configuration, for example, from 3 mm to 5 mm at a point immediately after the transition point (T) and remaining uniform at 5 mm up to the point immediately preceding the differentiated cross-section (224b, 244b).

In all represented variations of the envelope (20), as can be seen in the Figures, the differentiated cross-section (224b, 244b) present in the free end of the flap (224, 244) of the first part (22) and of second part (24) has a rectangular shape. However, each differentiated cross-section (224b, 244b) can have another shape, such as, for example, a circular shape. The thickness of each differentiated cross-section (224b, 244b) assumes a value greater than the thickness of the flap (224, 244), at one point immediately preceding the said differentiated cross-section (224b, 244b), preferably between 8 and 12 mm.

Preferably, the thickness of the third part (26) in the shape of an elastic ring assumes a value between 3 and 5 mm.

## Claims

1. **"CONFIGURATION APPLIED TO ENVELOPE FOR TIRE RETREADING,"** in which a tire casing (12) is covered by a pre-shaped tread (14) having a top (145) with a particular pattern of grooves (141), **wherein the** envelope (20) is comprised of three parts (22, 24, 26); wherein the first part (22) comprises a side wall (222), from which extends a flap (224), the said sidewall (222) containing a shape able to cover at least a part of the outer portion of a first flank (121) of the casing (12) and a first shoulder (142) of the tread (14), and the said flap (224) having a shape capable of covering a first portion of the top (145) of the tread pattern (14) wherein the free end of the said flap (224) has at least a differentiated cross-section (224b) with a thickness greater than the thickness of the said flap (224); wherein the second part (24) comprises a side wall (242), from which extends a flap (244), the said side wall (242) having a shape able to cover at least part of the outer portion of a second flank (122) of the casing (12) and a second shoulder (144) of the tread (14), and the said flap (244) having a shape able to cover a second portion of top (145) of the tread (14), other than the first portion covered by the flap (224) of the first part (22), and the free end of the flap (244) of the second part (24) has at least a differentiated cross-section (244b) with a thickness greater than the thickness of the flap (244); wherein the third part (26) comprises an elastic ring shape wide enough to cover the differentiated cross-section (224b) of the flap (224) of the first part (22) and the differentiated cross-section (244b) of the flap (244) of the second part (24); and wherein at least the first part (22) or the second part (24) is equipped with an air valve (28).

2. **"CONFIGURATION APPLIED TO ENVELOPE FOR TIRE RETREADING"** of claim 1, **wherein the** first part (22) comprises a uniform thickness, with the exception of its differentiated cross-section (224b), and the second part (24) comprises a uniform thickness, with the exception of its differentiated cross-section (244b), and the thickness of the first part (22) identical to the thickness of the second part (24).

3. **"CONFIGURATION APPLIED TO ENVELOPE FOR TIRE RETREADING"** according to claim 1, **wherein the** thickness of the first part (22) and second part (24) is greater from a transition point (T) to a point immediately preceding the differentiated cross-section (224b, 244b) present in the respective flap (224, 244), where each transition point (T) is located on the sidewall (222, 242) of the respective part (22, 24) into a position next to the said shoulder (142, 144) of the tread pattern (14).
